Europäisches Patentamt

European Patent Office

Office européen des brevets

(11) Veröffentlichungsnummer : **0 092 775**
**B1**

(12) **EUROPÄISCHE PATENTSCHRIFT**

(45) Veröffentlichungstag der Patentschrift :
03.12.86

(51) Int. Cl.⁴ : **G 01 N 33/49**, G 01 N 15/10

(21) Anmeldenummer : 83103794.0

(22) Anmeldetag : 19.04.83

(54) Messeinrichtung zur Messung des Verformungsvermögens von roten Blutkörperchen.

(30) Priorität : 28.04.82 DE 3215719

(43) Veröffentlichungstag der Anmeldung :
02.11.83 Patentblatt 83/44

(45) Bekanntmachung des Hinweises auf die Patenterteilung : 03.12.86 Patentblatt 86/49

(84) Benannte Vertragsstaaten :
AT BE CH DE FR GB IT LI LU NL SE

(56) Entgegenhaltungen :
DE-A- 2 405 839
DE-A- 3 121 974
DE-B- 2 428 082
BIOMEDIZINISCHE TECHNIK, Band 28, Heft 5, Mai 1983, Berlin H.G. ROGGENKAMP et al. "Ein Gerät zur elektrischen Messung der Verformbarkeit von Erythrocyten" Seiten 100-104
BIOMEDIZINISCHE TECHNIK, Band 27, Heft 7/8, Juli/August 1982, Berlin H.G. ROGGENKAMP et al. "Ein neues Verfahren zur Quantifizierung der Verformbarkeit von Erythrocyten" Seiten 162-166
BIOMEDIZINISCHE TECHNIK, Band 26, Heft 7/8, Juli/August 1981, Berlin H.G. ROGGENKAMP et al. "Production of Single Pore Membranes for the Measurement of Red Blood Cell Deformability" Seiten 167-169
SCAND.J.CLIN.LAB.INVEST., Vol. 41, Supplement 156, 1981, Oslo P.F. LEBLOND et al. "Evaluation of a simplified filtration technique for the routine measurement of erythrocyte deformability" Seiten 35-40
NACHRICHTENTECHNIK, 12. Jahrgang, Heft 2, Februar 1962, Leipzig G. PFEIFFER "Methoden und Geräte zur elektronischen Zählung von Blutkörperchen und zur Bestimmung ihrer Grössenverteilung" Seiten 47-50
Scand. J. clin. Lab. Invest.-Vol. 41-Supplement 156, 1981, S. 229-232

(73) Patentinhaber : Kiesewetter, Holger Dr.
Schneebergweg 211
D-5100 Aachen (DE)

(72) Erfinder : Kiesewetter, Holger, Dr.
Schneebergweg 211
D-5100 Aachen (DE)
Erfinder : Myrrenne, Heinz
Steffengasse 9
D-5106 Roetgen (DE)
Erfinder : Roggenkamp, Hans-Günther
Kullenhofstrasse 36
D-5100 Aachen (DE)

(74) Vertreter : Görtz, Dr. Fuchs, Dr. Luderschmidt Patentanwälte
Sonnenberger Strasse 100 Postfach 26 26
D-6200 Wiesbaden (DE)

**Beschreibung**

Die Erfindung betrifft eine Meßeinrichtung zur Messung des Verformungsvermögens von roten Blutkörperchen nach dem Oberbegriff des Anspruchs 1.

Ein bedeutender Parameter für das Fließverhalten des Blutes ist das Vermögen der roten Blutkörperchen, der Erythrozyten, sich zu verformen. In großen Blutgefäßen bewirkt diese Verformung eine Anpassung der Erythrozyten an die Strömungskräfte, also eine Minimierung des hydrodynamischen Widerstandes, in kleinen Blutgefäßen eine Anpassung an die geometrische Berandung. In den letzten Jahren ist eine umfangreiche Grundlagenforschung über Ursache und Folge des Verformungsvermögens von kernlosen Säuger- und Menschen-Erythrozyten durchgeführt worden, die klar bewiesen hat, daß die normal hohe Fließfähigkeit des Blutes bei schneller Strömung durch die Endstrombahn von der Fähigkeit der Erythrozyten zur Verformung abhängt. Das Verformungsvermögen ist dabei stark abhängig von den mechanischen Eigenschaften der Erythrozyten, wobei diese ihrerseits vom Aufbau und der chemischen Zusammensetzung geprägt sind.

Ein Erythrozyt ist ein nur unvollständig mit Flüssigkeit gefüllter Membransack, dessen Größe artspezifisch und ohne Beziehung zur Körpergröße ist. Sein mittlerer Durchmesser beträgt beim Menschen 7,5 $\mu$m, die Höhe etwa 1,5 bis 2 $\mu$m. Das Volumen ist 85 bis 90 $\mu$m$^3$, die Oberfläche schwankt zwischen 120 und 160 $\mu$m$^2$. Im Mittel sind im zirkulierenden Blut ca. 25 Billionen Erythrozyten vorhanden, die eine Gesamtfläche zwischen 3 000 und 4 000 m$^2$ besitzen.

Würde man bei einem Volumen von 90 $\mu$m$^3$ eine kugelförmige Gestalt bei einem Erythrozyten annehmen, so wäre das Verhältnis Oberfläche zu Volumen des Erythrozyten ungefähr 1,07 (bei einer Messung des Volumens in $\mu$m$^3$ und der Oberfläche in $\mu$m$^2$). Das tatsächliche Verhältnis bewegt sich jedoch zwischen 1,3 bis 1,8 (bei einer Messung des Volumens in $\mu$m$^3$ und der Oberfläche in $\mu$m$^2$). Durch die Verformbarkeit des Membransackes und die Viskosität des Membransackinhalts ist der Erythrozyt sehr gut in der Lage, seine äußere Form an die auf ihn wirkenden Kräfte anzupassen. Die Hauptaufgabe der Erythrozyten besteht darin, Sauerstoff zum Endverbraucher, also jeder Parenchymzelle, zu transportieren und von dort das Stoffwechselendprodukt Kohlendioxyd aufzunehmen. Diese Aufgabe kann der Erythrozyt nur erfüllen, wenn er in der Lage ist, auch das nutritive Kapillarbett mit Strömungsröhren, deren Durchmesser (3 bis 5 $\mu$m) kleiner sind als sein eigener, in angemessener Zeit zu passieren. Aus dieser einfachen geometrischen Randbedingung ergibt sich unmittelbar die Bedeutung, die dem Verformungsvermögen der Erythrozyten für die Fließfähigkeit und das Fließverhalten in den nutritiven Kapillaren aller Organe zukommt. Verschiedene Krankheiten beeinflussen die Verformbarkeit der Erythrozyten, so daß aus der Kenntnis einer (eingeschränkten) Verformbarkeit auf solche Krankheiten geschlossen werden kann.

Die nutritiven Kapillaren und vor allem die Sinus der Milz filtrieren alle schlecht verformbaren Erythrozyten aus, so daß eine Verweilzeit dieser Erythrozyten im zirkulierenden Blut nur sehr begrenzt ist. Dies bedeutet, daß nur besonders empfindliche Verfahren und Meßeinrichtungen die diskreten Veränderungen des Verformungsvermögens von roten Blutkörperchen erfassen können. Bei einer Messung der Verformbarkeit sollte einerseits möglichst die Geometrie und die Hydrodynamik der Mikrozirkulation simuliert werden und andererseits keine bzw. eine möglichst geringe Beeinflussung dieser nachgebildeten Mikrozirkulation durch die Messung selbst auftreten.

Im folgenden werden bekannte Meßverfahren und Meßeinrichtungen kurz beschrieben :

1. Viskositätsmessung in Rotations- oder Kapillarviskosimetern : Bei dieser Messung müssen gewaschene Erythrozyten in gepufferten, salinen Lösungen (pH = 7,4) als Suspension verwendet werden, da die Fähigkeit zur Zellverformung nur indirekt gemessen wird. Wird autologes Plasma oder ein anderes Suspensionsmedium benutzt, das Partikel enthält, die eine Aggregation der roten Blutkörperchen ermöglichen, wird mit diesen Suspensionen nicht allein das Verformungsvermögen der Erythrozyten sondern auch die viskositätsbeeinflussende Wirkung der Zellaggregation gemessen. Bei diesen Messungen sind die gewählten Schergrade so groß, daß nur das Verhalten der Erythrozyten bei schneller Strömung in großen Blutgefäßen simuliert wird. Hierbei verhalten sich die Erythrozyten wie Flüssigkeitstropfen, sie passen ihre Form den Strömungsbedingungen an. Die Erythrozytensuspension nimmt somit die Eigenschaften einer Emulsion an. Der Verformungsvorgang in der Mikrozirkulation ist jedoch eine Anpassung an eine vorgegebene Geometrie, so daß über eine Viskositätsmessung die Bestimmung des Verformungsvermögens in den nutritiven Kapillaren nur in grober Näherung möglich ist.

2. Vermessung der Erythrozytengeometrie in definierten Scherfeldern : Bei der Vermessung der äußeren Form der Erythrozyten werden in hochviskosen Suspensionsmedien in einem Strömungsfeld eingestellte Erythrozyten photographisch erfaßt. Keines der dazu bekannten Verfahren gibt jedoch annähernd die Verhältnisse der Mikrozirkulation wieder.

3. Bestimmung der Packungsdichte von Erythrozyten bei vorgegebenen Kräften : Bei diesem Meßverfahren wird die Pakkungsdichte von Erythrozyten nach einer Zentrifugation erfaßt. Dabei werden viel zu große und daher unphysiologische Kräfte auf die Erythrozyten aufgebracht. Ein prinzipieller Fehler kann dabei darin gesehen werden, daß von der Sedimentationsgeschwindigkeit beim Zentrifugieren in Riesenzentrifugen bei kleinen Zentrifugalkräften auf das Verformungsvermögen geschlossen wird, obwohl die Sedimentationsgeschwindigkeit in erster Linie von der Aggregation abhängig ist.

4. Ansaugen eines definierten Teils oder ganzer Erythrozyten in Mikropipetten : Die dabei verwendeten Saugdrücke sind bei Kanälen von 1 μm Durchmesser unphysiologisch hoch ($5 \times 10^4$ Pa). Bei Kanälen mit einem Durchmesser von 3 μm liegen die Drücke zwar im physiologischen Bereich (30 Pa), das Verfahren ist jedoch bei Messungen an einer repräsentativen Zellzahl zeitlich viel zu aufwendig und für Routinemessungen ungeeignet.

5. Filtration von Erythrozytensuspensionen oder antikoaguliertem Vollblut bei verschiedenen definierten Randbedingungen : Filtrationsverfahren zur Untersuchung des Verformungsvermögens von Erythrozyten sind mit Filtern wie Porensieben oder filzartigen Membranen mit Kapillarspalten bekannt, wobei entweder der treibende Druck oder der filtrierte Volumenstrom gemessen wird. Dabei werden meist zu hohe treibende Drücke verwendet, so daß die auf die Erythrozyten wirkenden Schubspannungen zu groß sind. Ein weiterer methodischer Fehler kann in der Verwendung von Vollblut gesehen werden, da in Abhängigkeit von der Leukozyten- und Thrombozytenzahl die verwendeten Filter verstopfen und damit nicht nur das Verformungsvermögen der Erythrozyten sondern zusätzlich als überlagernder Effekt die zeitliche Abnahme der Porenzahl der Filter gemessen wird. Allen Filtrationsverfahren gemeinsam ist vor allem, daß sie integrativ messen. Das heißt, bei gleichem filtrierten Volumenstrom kann nicht differenziert werden, ob z. B. die gesamte Zellpopulation geringfügig geschädigt ist oder ob der Großteil der Erythrozyten normal verformbar ist und nur eine kleine Teilpopulation hochgradig unverformbar ist.

6. Passagezeitmessung für den Durchgang einzelner Erythrozyten durch eine Einlochmembran : Dieses bekannte Verfahren (Scand. J. clin. Lab. Invest., 41, Suppl. 156, 1981, S. 229-232) bestimmt das Verformungsvermögen einzelner Erythrozyten durch die Messung ihrer Passagezeit durch eine einzelne Pore unter Einhaltung der geometrischen und hydrodynamischen Randbedingungen, wie sie bei der Mikrozirkulation auftreten. Das wesentliche Merkmal bei diesem Verfahren ist eine einzelne Durchströmöffnung (Pore) in einer Kunststoffolie, die als Modell einer natürlichen Kapillare anzusehen ist. Der Porendurchmesser ist dabei kleiner als der Ruhedurchmesser der Erythrozyten und liegt im Bereich von 3 bis 6 μm, die Porenlänge im Bereich von 15 bis 200 μm. Bei diesem bekannten Verfahren wird eine optische Meßeinrichtung verwendet, mit der die Passagezeit einzelner Erythrozyten durch die Pore erfaßt werden kann. Dazu ist eine Meßkammer aus lichtdurchlässigem Material von einer Membran in zwei Räume geteilt, die über eine Pore in der Membran verbunden sind. Eine Erythrozytensuspension wird der Meßkammer zugeführt und über einen regelbaren Druck durch die Pore gedrückt. Die optische Meßeinrichtung entspricht in ihrem Aufbau im wesentlichen einem Mikroskop, bei dem sich die Oberfläche der Membran in der Fokusebene eines Beleuchtungsstrahlengangs befindet. Der Teil des Beleuchtungslichtbündels, der durch die Pore hindurchtritt, wird erfaßt und von einem Photomultiplier verstärkt und in ein elektrisches Signal umgesetzt. Dieser als Meßlichtstrahl bezeichnete Anteil des Strahlenbündels wird dann, wenn ein Erythrozyt die Pore passiert, während der gesamten Passagezeit abgeschwächt. Diese Zeit der Abschwächung entspricht somit der Passagezeit eines Erythrozyten durch die Pore. Zur Auswertung nacheinander gemessener Passagezeiten wird das Signal aus dem Photomultiplier einer Mikroprozessoreinheit zugeleitet.

Die bekannte optische Meßeinrichtung zur Erfassung der Passagezeit einzelner Erythrozyten durch eine Pore ist aufwendig und durch notwendige Justierarbeiten an der optischen Einrichtung kompliziert zu handhaben. Somit eignet sich diese Meßeinrichtung im wesentlichen für wissenschaftliche Untersuchungen in größeren Laboratorien mit geschultem Fachpersonal und ist durch den apparativen Aufwand und die schwierige Handhabung, beispielsweise für Reihenuntersuchungen oder für den Einsatz in Kliniken, nur bedingt geeignet.

7. Weitere Meßanordnungen zur Bestimmung von Parametern der Blutkörperchen sind in der DE-A-2 405 839 und in DD-Zeitschrift Nachrichtentechnik, Bd. 12, 1962, Heft 2, Seite 47-50 beschrieben.

Die DE-A-2 405 839 beschreibt eine Anordnung zum Messen der Flexibilität von Blutkörperchen, bei dem letztere einen Meßkanal in einer metallischen Blende passieren, wobei der Meßvorgang selbst optisch gemessen wird. Bei derartigen optischen Meßverfahren stellen sich diverse Meßartefakte ein, da beispielsweise mechanische Erschütterungen der Meßapparatur Passagen vortäuschen, undefinierte An- und Abschwingvorgänge der einzelnen Erythrozyten Passagezeiten ergeben, die mit der Durchtrittszeit nicht korreliert sind, und dergleichen.

Bei der in « Nachrichtentechnik » beschriebenen Vorrichtung handelt es sich um die bekannte Coulter-Meßeinrichtung zur Zählung und Bestimmung der Größe von Teilchen in einer Suspension, bei der die Durchströmöffnung wenigstens in der Größenordnung der Erythrozyten, meist jedoch deutlich höher liegen soll. Bei diesem Meßverfahren soll nämlich die Verformbarkeit der vermessenen Teilchen ausgeschaltet werden, da dieser Parameter ein erheblicher Störfaktor für dieses Verfahren darstellt und ggf. sogar durch einen Formfaktor korrigiert werden muß.

Darüberhinaus arbeitet diese Einrichtung mit einer Gleichspannung, die auf die Erythrozyten, die elektrisch geladene Teilchen sind, eine in ihrer Größe kaum bestimmbare Kraft ausübt. Diese Kraft kann von Blut zu Blut variieren und somit eine standardisierte Messung unter definierten Bedingungen unmöglich machen.

Darüberhinaus treten durch eine derartige Gleichspannung elektrolytische Effekte im Suspensionsmedium sowie Denaturierungseffekte der Membraneiweiße durch zu hoher Stromwärme ein, was lediglich bei der Coulter-Meßvorrichtung toleriert werden kann.

Aufgabe der Erfindung ist es demgegenüber, eine Meßeinrichtung zur Messung des Verformungsvermögens von roten Blutkörperchen zu schaffen, die einfach aufgebaut und einfach zu handhaben ist.

Diese Aufgabe wird mit den Merkmalen des Anspruchs 1 gelöst.

Gemäß Anspruch 1 wird zur Erfassung der Passagezeit einzelner Erythrozyten durch eine Durchströmöffnung in einer Folie eine Elektrodenanordnung beiderseits der Folie verwendet, wobei die Elektroden mit Spannung beaufschlagbar sind und eine Spannungsänderung an den Elektroden während des Durchgangs eines Erythrozyten durch die Durchströmöffnung gemessen wird. Die Zeit, während der eine Spannungsänderung auftritt, entspricht somit der Passagezeit eines Erythrozyten durch die Durchströmöffnung. Eine so aufgebaute Meßeinrichtung ist einfach und preisgünstig herzustellen und schließt bei einer einfachen Handhabung nahezu eine Fehlbedienung aus. Sie ist damit für den Einsatz in Kliniken, Arztpraxen und bei Reihenuntersuchungen gut geeignet.

Die Unteransprüche haben vorteilhafte Weiterbildungen der Erfindung zum Inhalt.

Die Erfindung wird in der nachfolgenden Beschreibung einer Ausführungsform anhand der Zeichnung näher erläutert.

Es zeigen

Figur 1  eine Prinzipskizze einer Meßkammer,

Figur 2  eine Ausführungsform einer Meßkammer,

Figur 3  ein Prinzipschaltbild einer elekrischen Meßvorrichtung.

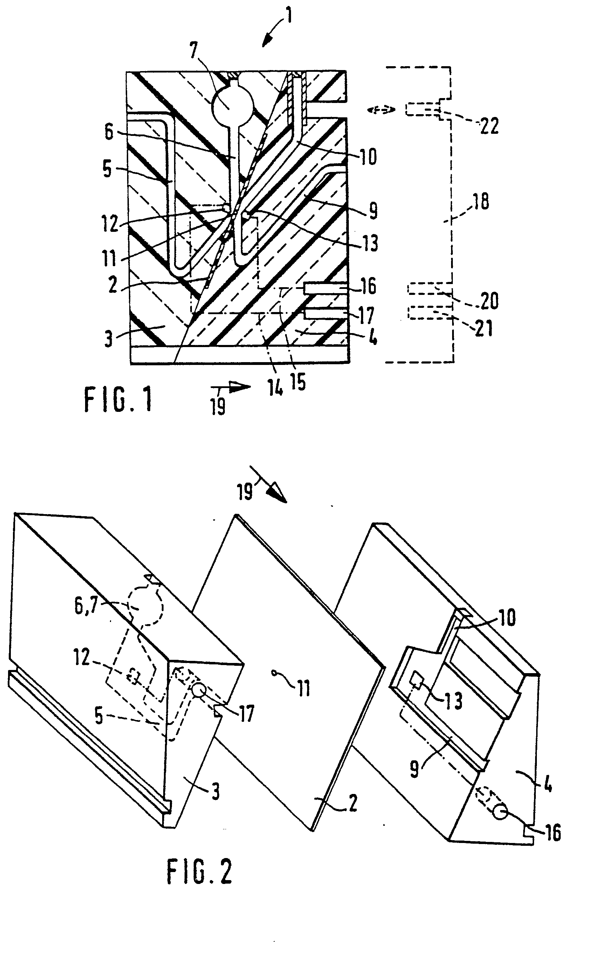

In Fig. 1 ist eine Meßkammer 1 dargestellt, die durch eine Folie 2 in einen ersten Kammerraum in einem ersten Kammerteil 3 und einen zweiten Kammerraum in einem zweiten Kammerteil 4 geteilt ist. Der erste Kammerraum wird von einem Einlaufkanal 5, der sich seitlich von der Meßkammer her waagrecht, dann senkrecht nach unten und wieder schräg nach oben abbiegend erstreckt, einem Steigrohr 6, und einem daran anschließenden Erythrozytenreservoir 7 gebildet. Der zweite Kammerraum wird durch einen Auslaufkanal 9 und einen Putzkanal 10 gebildet. Der Auslaufkanal 9 erstreckt sich von der Seite der Meßkammer 1 her waagrecht, biegt dann nach unten ab und steigt an der Folie 2 wieder nach oben. Der waagrechte Bereich des Auslaufkanals 9 ist dabei tiefer als der waagrechte Bereich des Einlaufkanals 5 angebracht. Die Folie 2 enthält, dort wo sie den ersten und zweiten Kammerraum teilt, eine Pore 11 als Durchströmöffnung. Beiderseits der Pore 11 sind je eine Elektrode 12, 13 angebracht. Die Elektroden 12, 13 sind über elektrische Leitungen 14, 15 mit Steckbuchsen 16, 17 verbunden. Die Meßkammer 1 ist in ein Gehäuse 18 (mit gestrichelter Linie angedeutet) einsetzbar und in Richtung des Pfeiles 19 auf Verbindungsteile schiebbar. Die Verbindungsteile sind insbesondere Steckkontakte 20, 21, die weiter zu einer elektrischen Meßvorrichtung (Fig. 2) führen, und eine Kupplung 22 zum Putzkanal 10, die über eine Schlauchleitung mit einem Generator zur Erzeugung einer Druckstoßwelle verbunden ist.

Fig. 2 zeigt eine entsprechend der Prinzipskizze (Fig. 1) ausgeführte Meßkammer 1, bei der die Folie 2 die Trennwand der vorzugsweise verklebten Kammerhälften darstellt. Die Kanäle sind dabei als Halbkanäle in jede Hälfte eingearbeitet. Durch das Verkleben der Folie 2 werden sie abgedichtet.

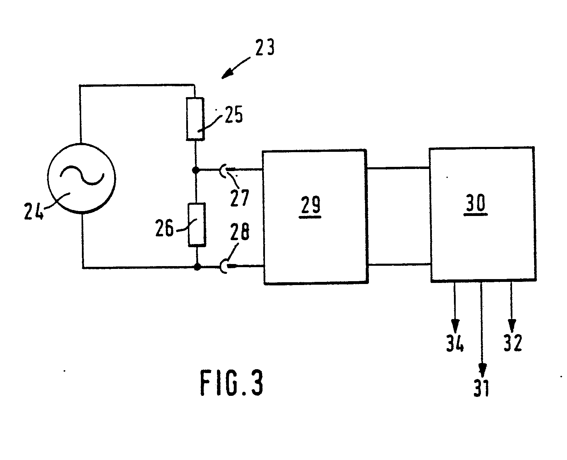

In Fig. 3 ist ein Prinzipschaltbild der elektrischen Meßvorrichtung dargestellt. In einem Stromkreis 23 liegen ein Wechselspannungsgenerator 24, ein Vorwiderstand 25 und ein Porenwiderstand 26. Der Porenwiderstand 26 entspricht dem Widerstand, der sich zwischen den Elektroden 12 und 13 durch die Pore 11 aus Fig. 1 hindurch ergibt. Verbindungspunkte 27 und 28 am Porenwiderstand 26 entsprechen den Anschlüssen an den Steckbuchsen 16, 17 bzw. den elektrischen Leitungen 14, 15 aus Fig. 1. An die Verbindungspunkte 27, 28 bzw. an die Elektroden 12, 13 (Fig. 1) ist eine Meß- und Anpaßeinheit 29 angeschlossen, der eine Auswerteeinheit nachgeschaltet ist. Die Meß- und Anpaßeinheit 29 besteht im wesentlichen aus einem Spannungsmeßgerät mit Signalausgang, das Spannungsänderungen am Porenwiderstand 26 erfassen kann und einem Analog-Digital-Konverter, der die Meßsignale in für die Auswerteeinheit 30 verarbeitbare Signale umsetzt. Die Auswerteeinheit 30 enthält im wesentlichen einen Mikroprozessor, der die Spannungsänderungen am Porenwiderstand 26 statistisch auswertet, mit einem Anschluß 31 für ein Display und einen Anschluß 32 für einen Plotter. Weiter enthält die Auswerteeinheit einen Zeitgrenzwertgeber, der einen Steueranschluß 34 zu einer nicht dargestellten Putzeinheit aufweist, die mit der Kupplung 22 aus Fig. 1 verbunden ist.

Die Meßkammer 1 hat in Verbindung mit der elektrischen Meßvorrichtung folgende Funktion: Zur Messung genügt ein Tropfen Blut, so daß die Abnahme des Blutes am Patienten vorzugsweise an der Fingerbeere oder den Ohrläppchen durchgeführt werden kann. Da dazu nur eine Lanzette erforderlich ist, kann die Blutentnahme ohne Anwesenheit eines Arztes durch eine Hilfskraft durchgeführt werden. Der Bluttropfen wird dann mit einer Mikropipette oder ähnlichem aufgesaugt und antikoaguliert oder nichtantikoaguliert in einer Pufferlösung suspendiert. Anschließend wird diese Suspension über den Einlaufkanal in die Meßkammer 1 eingefüllt. Soll die Messung statt in einer Pufferlösung in Plasma oder Serum durchgeführt werden, so muß eine größere Menge Blut (ca. 8 ml) venös entnommen werden. Durch Zentrifugieren wird reines Plasma gewonnen und darin ein Tropfen Blut suspendiert. Der Hämatrokit wird sowohl im Puffer als auch im Plasma künstlich auf ca. 1 % eingestellt.

Durch die konstruktive Überhöhung des Einlaufkanals 5 gegenüber dem Auslaufkanal 9 stellt sich eine hydrostatische Druckdifferenz zwischen dem ersten Kammerraum 3 und dem zweiten Kammerraum 4 ein, die eine Strömung von Pufferlösung und Erythrozyten durch die Pore 11 bewirkt. Die Folie 2 ist unter einem Winkel von ca. 65° angeordnet, was den Vorteil bringt, daß die Erythrozyten nicht auf der Folie 2 sedimentieren oder undefiniert in die Pore eintreten, sondern vorbestimmt von oben die Folie 2 herunterrollend immer in der gleichen Weise in die Pore 11 eintreten. Hier hat sich ein Anstellwinkel für die Folie 2 von 45 bis 80°, vorzugsweise 55 bis 65°, als geeignet erwiesen.

Unmittelbar nach dem Einbringen des Bluttropfens in die Meßkammer 1 setzt somit die Passage von Erythrozyten durch die Pore 11 ein. Der eigentliche Meßvorgang wird jedoch erst durch das Einschieben der Meßkammer 1 in das Gehäuse 18 gestartet. Dadurch werden über die Steckbuchsen 16, 17 und die Steckkontakte 20, 21 die Meßkammer 1 und die elektrische Meßvorrichtung verbunden. Das Meßprinzip beruht auf der Tatsache, daß sich der elektrische Widerstand zwischen den Elektroden 12, 13 ändert, wenn ein Erythrozyt die Pore 11 passiert. Diese Zeit kann gemessen werden und daraus kann auf die Verformbarkeit der Erythrozyten geschlossen werden. Um diese Widerstandsänderung zu erfassen, werden die Elektroden 12, 13 mit einer Wechselspannung aus dem Wechselspannungsgenerator 24 beaufschlagt. Die Frequenz dieser Wechselspannung soll im Bereich von 1 kHz bis 100 kHz, insbesondere 5 kHz bis 20 kHz, liegen. Die über den Vorwiderstand 25 und dem Porenwiderstand 26 angelegte Wechselspannung soll eine Amplitude (Spitze zu Spitze) von 5 mV bis 100 mV, insbesondere 10 mV bis 40 mV, haben. Die Größe des Vorwiderstands 25 ist, um möglichst große Änderungen des Meßsignals beim Passieren von Erythrozyten durch die Pore 11 zu erhalten, in der Größe des Porenwiderstandes 26 zu wählen und beträgt 10 kΩ bis 10 MΩ, insbesondere 100 kΩ bis 2 MΩ. Im Gegensatz zu einer Messung der Passagezeit mit Gleichspannung schließt die hier vorgeschlagene Wechselspannungsmethode eine Beeinflussung der Passagezeit durch Elektrophorese sicher aus. Weiter wird die in der Pore 11 auftretende Erwärmung durch den bei der Messung fließenden Strom durch die sehr kleinen Spannungen (1 mV bis 20 mV über der Pore 11) auf ein für die Messung unbedeutendes Maß von kleiner als $10^{-2}$ °C reduziert. Insgesamt bedeutet dies, daß der Durchtritt der Erythrozyten durch die Pore 11 durch die Messung praktisch nicht beeinflußt wird.

Die Anordnung der Elektroden 12, 13 kann beliebig gewählt werden, z. B. je eine in dem Einlauf- und Auslaufkanal 5, 9, vorzugsweise jedoch in der Nähe der Folie 2, d. h. unter und über der Pore 11. Die Größe der Elektroden spielt ebenso keine entscheidende Rolle. Sie sollte jedoch so groß gewählt werden, daß der Übergangswiderstand Elektrode zu Flüssigkeit viel kleiner als der Widerstand der Meßkette (Vorwiderstand 25 und Porenwiderstand 26) ist und sich keine Luftblasen isolierend vor die Elektroden 12, 13 legen können. Gute Ergebnisse wurden mit Elektrodenflächen von 3 mm² bis 14 mm² erzielt.

Bei der Wechselspannungsmessung ist noch zu beachten, daß die Folie 2 selbst einen Kondensator darstellt, so daß dem Ohmschen Porenwiderstand noch ein kapazitiver Widerstand parallel geschaltet ist. Bei steigender Frequenz und damit auch steigender Auflösung der Passagezeiten sinkt der Wert des kapazitiven Widerstandes. Daraus folgt eine bei steigenden Meßfrequenzen immer kleiner werdende Änderung des Meßsignals beim Teilchendurchtritt. Mit den vorgenannten Größen ist jedoch eine geeignete Auslegung der Meßeinrichtung zu erreichen, die den schon aufgezeigten Vorteil aufweist, die Meßergebnisse praktisch nicht durch die Messung selbst zu beeinflussen.

Bei der Dimensionierung der Meßkammer 1 haben sich folgende Werte als geeignet erwiesen : Porendurchmesser zwischen 3 µm und 6 µm ; Porenlänge zwischen 15 µm bis 200 µm ; Druckdifferenz an der Pore 11 kleiner als 100 Pa und ein Hämatokrit (Volumenbestandteil der roten Blutkörperchen) von etwa 1 %.

Die beim Durchtritt eines Erythrozyten durch die Pore 11 entstehende Spannungsänderung wird von der Meß- und Anpaßeinheit 29 zeitlich erfaßt und der Auswerteeinheit 30 zugeführt. Nach einer bestimmten Anzahl von Passagen, insbesondere 200, wird die Meßwertaufnahme abgeschlossen und die statistische Aufbereitung einer gespeicherten Urliste vorgenommen. Durch einen einzigen Knopfdruck als Ausleseimpuls kann der Bediener der Meßeinrichtung dann die Ergebnisse abrufen. Als Versuchsergebnisse können z. B. der Medianwert (Passagezeit, bei der 50 % der Passagen erfolgt sind), die Standardabweichung (als Maß für die Homogentität der Probe) sowie die Zahl der Passagezeiten, die größer als eine berechnete Maximalzeit, z. B. 200 ms, sind und jeweils Okklusionen der Pore 11 bedeuten, auf einer vorzugsweise digitalen Anzeige ausgegeben oder ausgedruckt werden. Als Okklusionen werden dabei alle die Passagen bezeichnet, deren Geschwindigkeit geringer ist, als es für eine ausreichende Sauerstoffversorgung des Gewebes erforderlich ist. Um Verlegungen während der Meßzeit wieder aufheben zu können und die Pore 11 wieder freizumachen, ist eine automatisch arbeitende Putzeinrichtung (nicht näher dargestellt) vorgesehen, die dann, wenn von der Meßeinheit 29 ein Überschreiten der maximalen Passagezeit, z. B. 200 ms, festgestellt wird, einen Putzimpuls erhält und eine Druckstoßwelle auf die Folie 2 aufbringt. Diese Druckstoßwelle drückt die Pore 11 wieder frei.

Auch in diesem Zusammenhang ist der schräge Einbau der Folie 2 vorteilhaft, da ein Teilchen, das die Pore 11 verlegt hat, nach dem Putzvorgang sicher abfließt und den Meßvorgang nicht nochmals stört.

Die Zeit von der Abnahme des Blutes bis zur Ergebnisausgabe beträgt für eine Messung weniger als 5 Minuten. Die Messung ist in jedem beliebigen, physiologischen Suspensionsmedium möglich. Dabei sollte der Hämatokritwert zur Vermeidung der gleichzeitigen Passage mehrerer Erythrozyten durch die Pore 11 etwa 1 Vol.% betragen. Der bei Suspensionsmedien, wie autologen Plasma bzw. Serum, mögliche Einfluß der Aggregation auf die Verteilung der Erythrozytenpassagezeit kann durch die Registrierung von sog. Doppelpassagen, also der Passage von Doubletten, separat erfaßt und ggf. entsprechend ausgeglichen werden. Für Routinemessungen kann ein Standardsuspensionsmedium verwendet, und es können gewaschene oder vorzugsweise ungewaschene Erythrozyten darin suspendiert werden. Dieses Suspensionsmedium hat dabei keinen signifikanten Einfluß auf die Verformbarkeit der Erythrozyten, erlaubt eine relativ lange Lagerung der Erythrozyten und verhindert weitestgehend eine Aggregation.

Neben der Messung der Passagezeit der Erythrozyten und der Registrierung von Doppelpassagen wird als dritter Faktor die Anzahl der Okklusionen, die Okklusionsrate, bestimmt. Als Okklusion wird dabei jede Passagezeit bezeichnet, die länger als eine vorgewählte Zeit, z. B. 200 ms, dauert. Mit Hilfe der Okklusionsrate, dem Mittelwert der Passagezeiten, und durch Variation des Porendurchmessers, der Porenlänge, und der treibenden Druckdifferenz ist es mit dieser Meßeinrichtung möglich, die verschiedenen Einflußfaktoren auf das Verformungsvermögen zu selektieren und darauf basierend, falls erforderlich, eine spezifische Behandlung eines Patienten durchzuführen.

Die Parameter, die sich als selektionierbar erwiesen haben, sind das Oberfläche zu Volumenverhältnis, die Zytoplasmaviskosität, die Membransteifigkeit und die Membranrotation um den Zellinhalt. Um diese Parameter zu differenzieren, müssen mit derselben Erythrozytensuspension mehrere Messungen durchgeführt werden, wobei jeweils Porendurchmesser, die Porenlänge und/oder der treibende Druck variiert werden. Dies geschieht zweckmäßigerweise in einer Anordnung mit mehreren parallelen Meßkammern. So steigt bei einer Zunahme des Oberfläche zu Volumenverhältnisses über 1,1 die Okklusionsrate stark signifikant an und geht gegen 100 %. Bei einer Membranversteifung ist die Passagezeit geringfügig erhöht und zwar unabhängig vom Porendurchmesser, während die Okklusionsrate mit abnehmendem Porendurchmesser signifikant ansteigt.

Bei einer Erhöhung der Zytoplasmaviskosität sind die Passagezeiten und die Okklusionsrate deutlich erhöht. Eine Einschränkung der Membranrotation um den Zellinhalt bewirkt bei nahezu konstanter Okklusionsrate unabhängig vom Porendurchmesser eine signifikante Zunahme der Passagezeit.

Um ein Blut in der vorbeschriebenen Weise unter verschiedenen Randbedingungen vermessen zu können oder um mehrere Blute gleichzeitig vermessen zu können, kann die gezeigte Meßeinrichtung als Mehrkanalversion ausgeführt sein. Diese Ausführung besteht dann im wesentlichen aus einem kompakten Gehäuse, dem elektrischen Steuerteil und aus mehreren, z. B. acht Meßkammern. Die Meßkammern sollten zur Schaffung jeweils gleicher Umweltbedingungen thermostatisiert sein. Diese Meßkammern können dann, wie bereits beschrieben, als Einschübe ausgebildet sein, die auf Steckkontakte im Gehäuse geschoben werden können. Dies ist vorteilhaft, da die Meßkammern beispielsweise zur Reinigung herausgenommen werden können und eine Verkabelung zwischen Meßkammer und Steuerteil entfällt.

Die Meßkammern können aus jedem nichtleitenden, blutverträglichen Material hergestellt sein, vorzugsweise aus klarem Polyurethan. Die Elektroden müssen aus edlen Elektrodenmaterialien, wie Edelstahl, Titan, Gold, Silber hergestellt oder mit solchen Materialien beschichtet sein. Neben der spanenden Fertigung einer Meßkammer mit auswechselbarer Kunststoffolie ist auch eine gegossene Ausführung mit eingeklebter Folie zum einmaligen Gebrauch möglich. Die Druckerzeugung des Druckgefälles in der Meßkammer könnte anstatt der beschriebenen hydrostatischen Methode auch durch eine Differenzdruckeinrichtung bzw. Druckregelungseinrichtung erfolgen.

Für einfache Routinemessungen, beispielsweise in Arztpraxen, könnte eine Einkanalversion gebaut werden, bei der die Meßkammer in ein Gehäuse einsetzbar ist und der Meßvorgang durch das Schließen einer Gehäuseklappe automatisch gestartet wird. Als Meßkammer 1 könnte hier vorteilhaft eine Wegwerf-Kammer mit eingeklebter Folie 2 verwendet werden, die bereits mit Pufferlösung vorgefüllt ist. Das zu vermessende Blut müßte dann nur noch in die Kammer injiziert werden.

Die Poren 11 in den Folien 2 werden vorzugsweise mit Methoden der Kernspurtechnik und anschließenden naßchemischen Verfahren hergestellt. Dabei ergibt sich eine gute Reproduzierbarkeit der Porengrößen. Jedoch weichen durch unvermeidliche Materialungenauigkeiten sowohl die Porendurchmesser als auch die Porenlängen um ca. ± 5 % von dem vorgegebenen Sollwert ab. Die gezeigte elektrische Messung enthält jedoch die Möglichkeit, die gemessenen Passagezeiten auf einen Wert, wie er bei einer « Normpore » erhalten worden wäre, zu korrigieren. Dadurch wird die Messung genauer bzw. werden Meßergebnisse besser vergleichbar. Die Korrektur geschieht folgendermaßen: Die Spannungsamplitude über einer Pore 11 ist proportional der Porenlänge und umgekehrt proportional dem Quadrat des Porendurchmessers (U ~ 1/2). Mit steigender Porenlänge bzw. sinkendem Porendurchmesser steigen die abgegriffene Spannung an den Elektroden und die gemessenen Passagezeiten an. Da jedoch die abgegriffene Spannung U ein Maß für den Formfaktor 1/d² ist, kann über diese gemessene Höhe der Spannungsamplitude eine einfache Korrektur der Passagezeiten vorgenommen werden.

Eine noch bessere, jedoch aufwendigere Korrektur der Passagezeiten ist dann möglich, wenn elektrisch über die Bestimmung der Kapazität der Membran die Porenlänge ermittelt wird. Dann ist es möglich, bei gleicher Pufferlösung, aus der Beziehung U ~ 1/d² den Porendurchmesser zu bestimmen und über eine z. B. einprogrammierte Eichkurve für die nun bekannten Werte für die Porenlänge und den Porendurchmesser die gemessenen Passagezeiten zu korrigieren.

Zur Bestimmung und Messung von Doppel- und Mehrfachpassagen kann ein Komparator mit vorgegebener Meßwertschwelle vorgesehen werden. Da das Volumen widerstandsspezifisch ist, kann ein Impulshöhenanalysator vorgesehen werden, mit dem die Volumenverteilung der Teilchen bestimmt werden kann.

Wie in der vorstehenden Beschreibung veranschaulicht, zeichnet sich die erfindungsgemäße Meßeinrichtung durch ihren einfachen Aufbau, ihren weitgehend universellen Einsatz und ihre einfache und sichere Handhabung aus.


**Patentansprüche**

1. Meßeinrichtung zur Messung des Verformungsvermögens von roten Blutkörperchen mit wenigstens einer Meßkammer, die durch eine Folie (2) in zwei Kammerräume (5, 6, 7 ; 9, 10) unterteilt ist, wobei die Folie (2) eine Durchströmöffnung (11) aufweist, deren Durchmesser kleiner als der große Ruhedurchmesser eines roten Blutkörperchens ist, und mit einem Druckgefälle zwischen den beiden Kammerräumen (5, 6, 7 ; 9, 10) in Richtung auf den zweiten Kammerraum (9, 10), so daß eine Strömung zwischen dem ersten, eine Pufferlösung und die roten Blutkörperchen aufnehmenden Kammerraum (5, 6, 7) und einen zweiten Kammerraum (9, 10) durch die Durchströmöffnung (11) erzeugbar ist, dadurch gekennzeichnet, daß beiderseits der Folie (2) wenigstens zwei Elektroden (12, 13) angeordnet sind, die mit Wechselspannung beaufschlagbar sind, und daß eine Spannungsmeßeinrichtung (29) zur Messung einer Spannungsänderung an den Elektroden (12, 13) vorgesehen ist, mit der eine beim Durchgang eines roten Blutkörperchens durch die Durchströmöffnung (11) hervorgerufene Spannungsänderung an den Elektroden (12, 13) meßbar und ihr zeitlicher Ablauf erfaßbar ist.

2. Meßeinrichtung nach Anspruch 1, dadurch gekennzeichnet, daß die Elektroden (12, 13) im Bereich der Durchströmöffnung (11) vor und hinter dieser angeordnet sind.

3. Meßeinrichtung nach Anspruch 1 oder 2, dadurch gekennzeichnet, daß die Meßkammer (1) thermostatisierbar ist.

4. Meßeinrichtung nach Anspruch 1 bis 3, dadurch gekennzeichnet, daß die Folie (2) unter einem Winkel von 45° bis 80° in die Meßkammer (1) eingebaut ist.

5. Meßeinrichtung nach Anspruch 1 bis 4, dadurch gekennzeichnet, daß die Meßkammer (1) als Einschub ausgebildet ist, der elektrische Steckkontakte (16, 17) enthält.

6. Meßeinrichtung nach Anspruch 1 bis 5, dadurch gekennzeichnet, daß die Meßkammer (1) als Wegwerfartikel zu einmaliger Messung aufgebaut ist und eine Pufferlösung, in die Blut einbringbar ist, enthält.

7. Meßeinrichtung nach Anspruch 1 bis 6, dadurch gekennzeichnet, daß mehrere bezüglich der Größe des Durchmessers, der Länge der Durchströmöffnung und des Druckgefälles gleich oder unterschiedlich dimensionierte Meßkammern (1) zur gleichzeitigen Messung von mehreren verschiedenen oder gleichen Blutproben enthalten sind.

8. Meßeinrichtung nach Anspruch 1 bis 7, dadurch gekennzeichnet, daß eine Vorrichtung zur Erzeugung einer Druckstoßwelle an die Meßkammer angeschlossen ist, die bei einer verlegten Durchströmöffnung (11) zu deren Reinigung betätigbar ist.

9. Meßeinrichtung nach Anspruch 1 bis 8, dadurch gekennzeichnet, daß die Folie (2) eine Fläche von 3 bis 30 mm² aufweist.

10. Meßeinrichtung nach Anspruch 1 bis 9, dadurch gekennzeichnet, daß die Frequenz der Wechselspannung zwischen 1 kHz und 100 kHz liegt.

11. Meßeinrichtung nach Anspruch 10, dadurch gekennzeichnet, daß die Wechselspannung über einen Vorwiderstand (25) angelegt ist, die Größe der Wechselspannung dabei von Spitze zu Spitze zwischen 5 mV und 100 mV liegt und die Größe des Vorwiderstandes (25) zwischen 100 kΩ und 10 MΩ liegt.

12. Meßeinrichtung nach Anspruch 1 bis 11, dadurch gekennzeichnet, daß die Durchströmöffnung (11) einen Durchmesser zwischen 3 μm und 6 μm und eine Länge zwischen 15 μm bis 100 μm hat, und das Druckgefälle kleiner als 100 Pa ist.

13. Meßeinrichtung nach Anspruch 1 bis 12, dadurch gekennzeichnet, daß der Spannungsmeßeinrichtung (29) eine Steuer- und Auswerteeinrichtung (30) nachgeschaltet ist.

14. Meßeinrichtung nach Anspruch 13, dadurch gekennzeichnet, daß die Steuer- und Auswerteeinrichtung (30) Durchgänge von roten Blutkörperchen zeitabhängig registriert und statistisch auswertet.

15. Meßeinrichtung nach Anspruch 13 oder 14, dadurch gekennzeichnet, daß die Steuer- und Auswerteeinrichtung (30) eine einstellbare Zeitmarke, z. B. bei etwa 200 ms. enthält und daß nach Überschreiten dieser Zeitmarke bei einem Durchgang eine Okklusion registriert wird und die Vorrichtung zur Erzeugung der Druckwelle betätigt wird.

16. Meßeinrichtung nach Anspruch 1 bis 15, dadurch gekennzeichnet, daß mit der Spannungsmeßeinrichtung (29) und der Steuer- und Auswerteschaltung (30) die Spannungsamplitude an den Elektroden (12, 13), meßbar ist und die gemessene Durchgangszeit eines roten Blutkörperchens durch die Durchströmöffnung (11) entsprechend der Spannungsamplitude auf eine Durchgangszeit durch eine fiktive, bestimmte Normdurchströmöffnung korrigierbar ist.

17. Meßeinrichtung nach Anspruch 1 bis 16, dadurch gekennzeichnet, daß das Druckgefälle hydrostatisch durch eine Überhöhung des Flüssigkeitsniveaus im ersten Kammerraum (3) gegenüber dem zweiten Kammerraum (4) erzeugbar ist.

18. Meßeinrichtung nach Anspruch 1 bis 17, dadurch gekennzeichnet, daß die Anzahl der Okklusionen als Maß für die Verformbarkeit während eines Meßvorgangs erfaßt werden.

19. Meßeinrichtung nach Anspruch 1 bis 18, dadurch gekennzeichnet, daß die Meßkammer (1) aus zwei Hälften mit eingefrästen Vertiefungen besteht, die Vertiefungen beim Aneinanderlegen der beiden Hälften die Hohlräume in der Meßkammer (1) bilden und zwischen die Hälften die Folie (2) eingebracht ist, die zugleich als Trenn- und Abdichtwand dient.

20. Meßeinrichtung nach Anspruch 1 bis 19, dadurch gekennzeichnet, daß ein Komparator mit vorgegebener Meßwertschwelle zur Messung von Doppel- und Mehrfachpassagen vorgesehen ist.

## Claims

1. Device for measuring the deformation capacity of red blood corpuscles and comprising at least one measuring chamber sub-divided by a film (2) into two compartments (5, 6, 7 ; 9, 10) the film (2) having a throughflow aperture (11) the diameter of which is smaller than the large quiescent diameter of a red blood corpuscle and with a pressure gradient between the two compartments (5, 6, 7 ; 9, 10) in the direction of the second compartment (9, 10) so that a flow can be generated between the first compartment (5, 6, 7) which accommodates a buffer solution and the red blood corpuscles and a second compartment (9, 10) through the throughflow aperture, characterised in that there are on both sides of the film (2) at least two electrodes (12, 13) to which an alternating current voltage can be applied and in that a voltage measuring device (29) is provided for measuring a variation in voltage at the electrodes (12, 13) with which it is possible to measure and ascertain the time-related pattern of a voltage variation at the electrodes (12, 13) occasioned upon passage of a red blood corpuscle through the throughflow aperture (11).

2. Measuring device according to Claim 1, characterised in that the electrodes (12, 13) are disposed in the region of and upstream and downstream of the throughflow aperture (11).

3. Measuring device according to Claim 1 or 2, characterised in that the measuring chamber (1) can be thermostatically controlled.

4. Measuring device according to Claim 1 to 3, characterised in that the film (2) is incorporated into the measuring chamber (1) at an angle of 45° to 80°.

5. Measuring device according to Claim 1 to 4, characterised in that the measuring chamber (1) is constructed as a push-in assembly which contains electrical plug-in contacts (16, 17).

6. Measuring device according to Claim 1 to 5, characterised in that the measuring chamber (1) is constructed as a disposable item intended for a single measuring operation and contains a buffer solution into which the blood can be introduced.

7. Measuring device according to Claim 1 to 6, characterised in that a plurality of measuring chambers (1) of the same or different diameter, length of throughflow aperture and pressure gradient are contained for the simultaneous measurement of several different or identical blood samples.

8. Measuring device according to Claim 1 to 6, characterised in that to the measuring chamber is connected a device for generating a pressure shock wave, which can be actuated in order to clean an obstructed throughflow aperture (11).

9. Measuring device according to Claim 1 to 8, characterised in that the film (2) has an area of 3 to 30 sq · mm.

10. Measuring device according to Claim 1 to 9, characterised in that the frequency of the alternating current voltage is between 1 kHz and 100 kHz.

11. Measuring device according to Claim 10, characterised in that the alternating current voltage is applied *via* a protective resistor (25), the level of the alternating current voltage being thereby from peak to peak between 5 mV and 100 mV, the size of the protective resistor (25) being between 100 kΩ and 10 MΩ.

12. Measuring device according to Claim 1 to 11, characterised in that the throughflow aperture (11) has a diameter between 3 μm and 6 μm and a length between 15 μm to 100 μm and in that the pressure gradient is smaller than 100 Pa.

13. Measuring device according to Claim 1 to 12, characterised in that the voltage measuring device (29) has on its downstream side a control and evaluating means (30).

14. Measuring device according to Claim 13, characterised in that the control and evaluating means (30) records as a function of time and statistically evaluates the passages of red blood corpuscles.

15. Measuring device according to Claim 13 or 14, characterised in that the control and evaluating means (30) comprises an adjustable time mark, e. g. at about 200 ms and in that once this time mark is exceeded during a passage, an occlusion is registered and in that the device for generating the pressure wave is actuated.

16. Measuring device according to Claim 1 to 15, characterised in that the voltage measuring device (29) and the control and evaluating circuit (30) can be used to measure the voltage amplitude at the electrodes (12, 13), the measured passage time of one red blood corpuscle through the throughflow aperture (11) being correctable in accordance with the voltage amplitude in relation to a passage time through an imaginary but determinate standard throughflow aperture.

17. Measuring device according to Claim 1 to 16, characterised in that the pressure gradient can be generated hydrostatically by raising the level of liquid in the first compartment (3) in relation to the second compartment (4).

18. Measuring device according to Claim 1 to 17, characterised in that the number of occlusions is recorded as a measure of the deformability during one measuring process.

19. Measuring device according to Claim 1 to 18, characterised in that the measuring chamber (1) consists of two halves with milled-in depressions, the depressions forming the cavities in the measuring chamber (1) when the two halves are placed one against the other and the film (2) is incorporated between the halves to serve at the same time as a partition and as a sealing wall.

20. Measuring device according to Claim 1 to 19, characterised in that a comparator is provided which has a preset measured value threshold for measuring double and multiple passages.


**Revendications**

1. Dispositif de mesure pour mesurer la faculté de déformation de globules rouges du sang, comportant au moins une chambre de mesure subdivisée en deux volumes (5, 6, 7 ; 9, 10) par une feuille (2) présentant une ouverture de passage (11) dont le diamètre est plus petit que le grand diamètre d'un globule rouge au repos, une chute de pression, dirigée vers le deuxième volume (10), étant établie entre les deux volumes (5, 6, 7 ; 9, 10) de la chambre, de manière qu'il puisse y avoir production, au travers de l'ouverture de passage (11), d'un écoulement entre, d'une part, le premier volume (5, 6, 7) recevant une solution tampon et les globules rouges et, d'autre part, le deuxième volume (9, 10), caractérisé en ce que, de part et d'autre de la feuille (2), sont agencées au moins deux électrodes (12, 13) aptes à recevoir une tension alternative, et en ce qu'il est prévu, pour la mesure d'une variation de tension aux électrodes (12, 13), un dispositif de mesure de tension (29) avec lequel peut être mesurée, et saisie quant à son évolution dans le temps, une variation de la tension aux électrodes (12, 13) provoquée par le passage d'un globule rouge par l'ouverture de passage (11).

2. Dispositif de mesure selon revendication 1, caractérisé en ce que les électrodes (12, 13) sont agencées dans la région de l'ouverture de passage (11), en avant et en arrière de celle-ci.

3. Dispositif de mesure selon revendication 1 ou 2, caractérisé en ce que la chambre de mesure (1) peut être dotée d'un thermostat.

4. Dispositif de mesure selon revendication 1 à 3, caractérisé en ce que la feuille (2) est montée dans la chambre de mesure (1) sous un angle de 45° à 80°.

5. Dispositif de mesure selon revendication 1 à 4, caractérisé en ce que la chambre de mesure (1) est réalisée en tant que tiroir contenant des contacts électriques pour embrochage (16, 17).

6. Dispositif de mesure selon revendication 1 à 5, caractérisé en ce que la chambre de mesure (1) est construite en tant qu'article jetable, utilisable une seule fois, et contient une solution tampon dans laquelle du sang peut être apporté.

7. Dispositif de mesure selon revendication 1 à 6, caractérisé en ce qu'il comporte plusieurs chambres de mesure (1), dimensionnées identiquement ou différemment pour ce qui est de la grandeur du diamètre et la longueur de l'ouverture de passage et de la chute de pression, pour la mesure simultanée de plusieurs grandeurs relatives au sang, identiques ou différentes.

8. Dispositif de mesure selon revendication 1 à 7, caractérisé en ce qu'un dispositif pour engendrer une onde de choc de pression est raccordé à la chambre de mesure et peut être actionné en cas d'engorgement de l'ouverture de passage (11), pour nettoyer celle-ci.

9. Dispositif de mesure selon revendication 1 à 8, caractérisé en ce que la feuille (2) présente une surface de 3 à 30 mm².

10. Dispositif de mesure selon revendication 1 à 9, caractérisé en ce que la fréquence de la tension alternative est comprise entre 1 kHz et 100 kHz.

11. Dispositif de mesure selon revendication 10, caractérisé en ce que la tension alternative est appliquée par l'intermédiaire d'une résistance série (25), en ce que la grandeur de la tension alternative, de crête à crête, est alors comprise entre 5 mV et 100 mV, et en ce que la grandeur de la résistance série (25) est comprise entre 100 k et 100 M.

12. Dispositif de mesure selon revendication 1 à 11, caractérisé en ce que l'ouverture de passage (11) possède un diamètre entre 3 μm et 6 μm et une longueur entre 15 μm et 100 μm, et la chute de pression est inférieure à 100 Pa.

13. Dispositif de mesure selon revendication 1 à 12, caractérisé en ce que le dispositif de mesure de tension (29) est suivi d'un dispositif de commande et d'interprétation (30).

14. Dispositif de mesure selon revendication 13, caractérisé en ce que le dispositif de commande et interprétation (30) enregistre, en fonction du temps, et interprète statistiquement, les passages de globules rouges.

15. Dispositif de mesure selon revendication 13 ou 14, caractérisé en ce que le dispositif de commande et d'interprétation (30) comporte une marque de temps réglable, par exemple à environ 200 ms, et en ce qu'après dépassement de cette marque de temps, lors d'un passage, une occlusion est enregistrée et le dispositif pour générer l'onde de pression est actionné.

16. Dispositif de mesure selon revendication 1 à 15, caractérisé en ce que l'amplitude de tension aux électrodes (12, 13) peut être mesurée avec le dispositif de mesure de tension (25) et le circuit de commande et interprétation (30), et le temps de passage mesuré d'un globule rouge passant par l'ouverture de passage (11) peut être corrigé, en fonction de l'amplitude de tension, pour être ramené à un temps de passage par une certaine ouverture de passage fictive normalisée.

17. Dispositif de mesure selon revendication 1 à 16, caractérisé en ce que la chute de pression peut être produite hydrostatiquement par une surélévation du niveau de liquide dans le premier volume (3) de la chambre, par rapport au deuxième volume (4).

18. Dispositif de mesure selon revendication 1 à 17, caractérisé en ce que le nombre des occlusions est saisi au cours d'un processus de mesure, en tant que mesure de la déformabilité.

19. Dispositif de mesure selon revendication 1 à 18, caractérisé en ce que la chambre de mesure (1) est constituée de deux moitiés dans lesquelles des dépressions sont aménagées par fraisage, ces dépressions formant le volume dans la chambre de mesure (1) lorsque les deux moitiés sont appliquées l'une contre l'autre, et en ce qu'entre les moitiés est agencée la feuille (2) qui sert en même temps de cloison de séparation et d'étanchéité.

20. Dispositif de mesure selon revendication 1 à 19, caractérisé en ce qu'un comparateur avec seuil de valeur de mesure prédéterminé est prévu pour la mesure de passages doubles et multiples.

FIG. 1

FIG. 2

FIG.3